# EUROPEAN PATENT SPECIFICATION

(11) **EP 3 316 065 B1**
(45) Date of publication and mention of the grant of the patent: **14.02.2024**
(21) Application number: 17198570.8
(22) Date of filing: 26.10.2017
(51) Int. Cl.: G05D 1/02

(54) **METHOD FOR DETERMINING A PATH**
VERFAHREN ZUR BESTIMMUNG EINES PFADES
PROCÉDÉ DE DÉTERMINATION D'UN CHEMIN

(30) Priority: 26.10.2016 DE 102016120460
(43) Date of publication of application: 02.05.2018
(73) Proprietor: Einhell Germany AG, 94405 Landau / Isar (DE)
(72) Inventor: Guggenberger, Martin, 84164 Moosthenning (DE); Waldher, Rainer, 84367 Tann (DE); Thannhuber, Markus, 94405 Landau an der Isar (DE)
(74) Representative: Wittmann, Ernst-Ulrich

(56) References cited:
- EP-A2- 1 916 584
- US-A- 5 995 902
- US-A1- 2006 178 823
- US-A1- 2012 290 165
- US-B1- 6 876 920

## Description

The present invention relates to the field of determining a path for a moveable object in a physical area. Said moveable object may be an aviation device, e.g. an autonomous aviation device, a moveable robot, e.g. for service purposes, for dangerous tasks like mine sweeping, or for agricultural uses like seeding or mowing, or a ship or submarine, e.g. to search through some area, or a similar device. In this description, the notion "robot" means the same as "moveable object".

Methods for determining a path are known in the art. However, manual interaction is often required, particularly if high coverage of the area the moveable object works on is required. Another reason for manual interaction is to overcome unexpected situations like obstacles, rims, or the like. These drawbacks result in a higher effort when running methods according to state of the art. Some methods lead to insufficient coverage of the area to work on.

For example, US 6 876 920 B1 discloses an aiding guidance system to help an agricultural vehicle along a number of paths offset from each other by approximately the width of the working implement being towed to achieve the least discrepancy between the predetermined path and the driven path. US 6 876 920 B1 is directed to solving the problem of aiding in the guidance of an agricultural vehicle along a series of adjacent paths (lines that are parallel and offset from each other by approximately the width of the working implement being towed), wherein therefore largely determining deviations of the vehicle from a given path. A way of determining a path is not provided and the agricultural vehicle is assumed to be manned.

US 2006178823 A1 provides another system and a method for precision guiding of agricultural vehicles along a series of adjacent paths to form rows for cultivating a field. The vehicle is moved along a first path while receiving positioning information from a navigational system (e.g., RTK GPS). This positioning information is stored in a processor and is used by the processor to compute a second path adjacent to said first path by calculating piecewise perpendicular offsets from the first path at multiple locations along the first path. The vehicle is manned, so that deviations due to obstacles can be input by a driver and saved for subsequent applications, but no arbitrary path may be determined as each point is determined with reference to the distance from a previous path.

EP 1 916 584 A2 provides a swath generation apparatus (SGA) creating a curved swath path for an agricultural vehicle with an associated implement. The SGA determines orthogonal values of the vehicle heading at at least two location data points. At one data point, the operator may apply an adjustment input for the vehicle path for compensating the effects of GPS drift. The SGA modifies the data point positions of the swath path by a portional amount of the orthogonal values based on a difference, relative to the orthogonal coordinate system, between the first and second vehicle headings. Again, the vehicle is manned, adjustments are done manually and no orientation information is provided for data point.

US 5 995 902 A provides a swath planning system, accepting curved path information to synthesize and generate parallel curved paths. The swath planning system terminates the generation of parallel curved paths which exceed physical limitations of the associated machinery. The swath planning system provides an operator with significant advance information to create a more efficient and relaxed product application. The swath planning system further provides environmental advantages by eliminating or significantly reducing ground and/or water contamination and by eliminating or significantly reducing product waste due to more precise and accurate placement of resources. The system requires an operator, no arbitrary path may be determined and no orientation information is provided for data point, as parallel curved paths are generated.

US 2012/290165 A1 relies on ultrasonic transceivers for communicating between a robot and physical stands inserted in the ground to delimit the contour of a given area to be worked. The positions are recorded by continuous interaction of the robot with said stands, measuring relative distances by measuring the time it takes the signal to travel between transceivers. Once the positions of the stands are obtained, the processor of the robot runs several curve-fitting algorithms to obtain curve-connecting lines. This procedure may serve to run spiralling inward or parallel paths, within an area defined by physical stands, wherein obstacles are to be detected using infrared sensors. The stands of US 2012/290165 A1 are not point-wise associated with orientation information and stands have to be used consecutively to effectively determine a curved or however segmented path.

With this background, it is an object of the present invention to provide a method that improves or, at least partly, overcomes the disadvantages of the state of the art.. The invention is set out in the appended set of claims.

The method is based on at least a first and a second reference location. These - and, if necessary, further - reference locations are a set of positions in a physical area. They are associated to a set of corresponding n-tuples.

In this invention, the reference locations are assumed to be something given. To determine these reference locations may be object of a different invention. However, these inventions do not rely on each other.

Said reference locations are attributed with an orientation information. This orientation information is used to determine the path for the robot. The orientation information can be a preferred angle or angle range where the next position should be located. It can - additionally or alternatively - be a direction or preferred direction, an information like "go preferably left" or "go preferably clockwise" or the like. The orientation information can also be a prevention, e.g. "do not go into this or that direction".

The reference locations are comprised in a first contour. A contour consists of a set of reference locations. The contour may be understood as a kind of border the robot should move within. However, in some situations the robot may be allowed to cross the contour.

The physical positions, for instance the first target location and the reference locations, are associated to corresponding n-tuples. These n-tuples may be a set of coordinates, e.g. of the form < xᵢ , yᵢ , oᵢ > for robots that move in a 2-dimensional area, where xᵢ and yᵢ represent x- and y-coordinates of the positions of the corresponding locations, and oᵢ represents orientation information. The n-tuples may contain other or additional information, for example: For robots that move in a 3-dimensional area, z-coordinates are used in addition. The coordinates may be represented as polar coordinates or in another coordinate system. The coordinates may as well be represented as functions. Information on uncertainties (e.g. measurement uncertainties) may also be contained in the n-tuples.

The set of n-tuples of the first and the second reference location are stored in a storage device. This makes the n-tuples - and the positions associated with them - accessible for computing systems. The storage device could be made of semiconductors, of magnetic or optic means, or other means to store and/orto handle information.

The method according to the present invention comprises at least the steps of:
- Retrieving from the storage device at least the set of n-tuples associated to the first and the second reference location;
- Determining the n-tuple associated to the first target location by using a first computational procedure, wherein the first computational procedure is based on orientation information and at least on the set of n-tuples associated to the first and the second reference location;
- Storing the n-tuple associated to the first target location in the storage device.

Hence, the storage device is both used to retrieve the set of n-tuples associated to the first and the second reference location and to store the n-tuple associated to the first target location in the storage device, which is result of a first computational procedure.

To achieve this, the first computational procedure uses at least information that is related to the position of the first and the second reference location and the orientation information.

Executing this method repeatedly leads to a second contour that lies essentially within the first contour. Therefore, the robot first follows the set of first target locations, comes back to a - basically arbitrary - starting point. After this first round, the robot takes the second contour and transforms it into a new first contour, determines a next set of first target locations, follows this, and so on. By using this method, the robot moves essentially in always-narrower rounds.

In some embodiments, the orientation information is of Boolean type.

The orientation information may be, for instance: Move clockwise or counter-clockwise; keep a predefined position - e.g. the centre of an area - right or left; move up or down; decide true or false.

This information is used in the first computational procedure, typically when the computation leads to more than one, particularly to two, first target locations. Then, the orientation information of Boolean type is of relevance to decide which one of these first target locations to take.

In some embodiments, the n-tuple comprises at least the orientation information and at least one x-coordinate and one y-coordinate and/or a function that represents at least a part of the first contour.

The n-tuples, which are associated to corresponding physical positions, may be of the form < xᵢ , yᵢ , oᵢ >, where xᵢ and yᵢ represent x- and y-coordinates of the positions of the corresponding locations, respectively, and oᵢ represents orientation information.

The n-tuples may contain other or additional information, for example z-coordinates, particularly for robots that move in a 3-dimensional area. The coordinates may be represented as polar coordinates or in another coordinate system. The coordinates may as well be represented as functions.

In some embodiments, the first computational procedure - which determines the n-tuple associated to the first target location - comprises following steps:
- Dropping a perpendicular at a predefined point, preferably the half, of a line connecting first and the second reference location (110, 120) associated to the set of n-tuples (210, 220);
- Determining a direction, based on the orientation information;
- Determining the first target location either at the predefined point or on said perpendicular at a pre-selected distance from the predefined point in the determined direction.

For this implementation of the first computational procedure, a line is drawn or computed that connects the first and the second reference location. At a predefined point, preferably at the half of this line, a perpendicular that crosses this line is dropped.

Then, the orientation information is used to determine a direction. For instance, if the orientation information is a preferred angle range, the computational procedure only uses the side of the perpendicularthat has the direction of the preferred angle range. Or, in case the orientation information tells "go clockwise", the computational procedure only uses the side of the perpendicular that lies clockwise.

When the perpendicular and the direction is set, the first target location is determined by constructing a point or position at a pre-selected distance from said predefined point. In some cases, e.g. for some reference locations of the first round, the pre-selected distance may be zero.

In some embodiments, the n-tuple associated to the first target location is determined by executing the first computational procedure, based on orientation information and at least on the set of n-tuples associated to the first, the second and a third reference location n-tuple, which is also part of the first contour. For these embodiments, the first computational procedure comprises following steps:
- Constructing a circle that includes the first, the second, and the third reference location, wherein said second reference location is between said first and said third reference location;
- Determining a direction, based on the orientation information and the centre of said circle, on a line between second reference location and said centre;
- Determining the first target location on said line at a pre-selected distance from the second reference location.

For these embodiments, the first computational procedure uses 3 reference locations to determine the first target location, namely the first, the second, and a third reference location. All these reference locations are part of the first contour, and they are associated to the first, the second, and a third n-tuple, respectively.

Based on these 3 reference locations, a circle is constructed that includes said 3 reference locations. The reference location that has a minimal distance to the other reference locations is considered as second reference location; hence, it is located between said first and said third reference location. Then, a line is constructed that goes through the second reference location and the centre of said circle. Now, the orientation information is used to determine the direction, starting from the second reference location, where the first target location is determined.

After that, the first target location is determined by constructing a point or position at a pre-selected distance from said second reference location. In some cases, e.g. for some reference locations of the first round, the pre-selected distance may be zero.

Executing the first computational procedure repeatedly leads to a second contour that lies essentially within the first contour. Therefore, the robot first follows the set of first target locations, then comes back to a - basically arbitrary - starting point. After this first round, the robot takes the second contour and transforms it into a new first contour, determines a next set of first target locations, follows this, and so on. By using this method, the robot moves essentially in always-narrower rounds or - informally spoken - shifts the new first contour with every round closerto a middle area of the first contour. This middle area is not necessarily sited in a geometric mid of the first contour.

In some embodiments, the result of the shift is written in a list called "New Points", i.e. n-tuples that are associated to newly determined target locations. During normal operation, this list holds between 2 and 100, particularly 10 "New Points". When the robot has reached essentially every position within the first contour, the list holds zero "New Points".

In some embodiments, uncertainties are considered by the first computational procedure. Uncertainties may be associated with the reference locations and/or the current position of the moveable object. Uncertainties may be caused - for instance - by turbulences for aviation devices, by drifts for water-based vehicles, or come from muddy, slippery, etc. ground for land-based vehicles, which lead to irregular moves. They may result from deviations during determination of the robot's current position, e.g. resulting from GPS-based imprecision. Uncertainties may also result from inexactly determining the positions of the first contour.

Uncertainties can be specified in the n-tuples. For instance, an n-tuple for a robot that moves in a 2-dimensional area and has uncertainties sx and sy in x- and y-direction, respectively, may be of the form < xᵢ , sxᵢ , yᵢ , syᵢ , oᵢ >.

In some embodiments, smoothed target locations are used. It is advantageous for moveable robots to move on a smoothed path, because smoothed paths reduce forces on the power-train and help to reduce the overall energy consumption. The smoothed path consists of an ordered set of smoothed target locations.

To determine a smoothed path, the robot uses at least first and second smoothed target locations, additionally to the target locations. The first and second smoothed target locations are associated to a set of corresponding n-tuples. To determine the smoothed path, the path must have been determined already. Afterthat, at least following steps are done:
- Retrieving from the storage device at least the n-tuple associated to the first target location;
- Determining the n-tuples associated to the first and second smoothed target locations by using a second computational procedure, wherein the second computational procedure is based on the n-tuple associated to the first target location;
- Storing the n-tuples associated to the first and second smoothed target locations in the storage device.

There are several methods available that implement said second computational procedure, or at least a part of it. For instance, the smoothed path is calculated from the path by using an interpolation method, particularly a polynomial interpolation or a spline interpolation, preferably a cubic spline algorithm. These methods, e.g. spline calculations, polynomial interpolation, or others, are basically known, but so far rather used for drawings than for smoothing physical movements. To determine the first and second smoothed target locations, between 2 and 30, preferably between 4 and 15, most preferably 7 n-tuples need to be retrieved from the path.

In some embodiments, the smoothed path uses modified spline interpolation. Forthis, the smoothed path comprises at least one reference location of the first contour, from and/or to which the interpolation method is a straight line.

This method has the advantage that obstacles or the like - e.g. a fence, a rock, or an edge - can be circumvented, even if the smoothed path would crash with the fence, or rock, otherwise.

In these embodiments, the second computational procedure realizes - as an additional feature - to recognize reference locations from and/or to which the interpolation method is a straight line. This is achieved by an additional entry in the n-tuples associated to these reference locations.

In some embodiments, the second computational procedure may - instead of moving in a straight line - allow to move in other curves. For instance, if crashing a rock is suspected and said rock would lie, when applying a simple spline algorithm, on a convex spline curve, the robot's smoothed path may actually lie on a concave curve, i.e. away from the rock. This method has the advantage of further reducing the danger of touching obstacles.

In some embodiments, each pair first and second smoothed target locations are essentially equidistant. This has the advantage that it leads to an even smoother moving of the robot. These equidistant smoothed target locations are determined by a third computational procedure.

The equidistant smoothed target locations have, for instance, a distance for which the robot needs one second or less to move.

In some embodiments, after some or all computations, using said second computational procedure, a comparison is done between the computed smoothed target location and the actual smoothed target location in the physical area.

To achieve this, the n-tuple associated to the first target location is compared with the first target location in the physical area, or the n-tuples associated to the first and second smoothed target locations are compared with the first and second smoothed target locations in the physical area. Then, if differences appear between the n-tuples and the first and second smoothed target locations, the n-tuples are corrected accordingly.

These differences may result from turbulences for aviation devices, from drifts for water-based vehicles, orfrom muddy, slippery, etc. ground for land-based vehicles, etc., in combination with deviations when determining the current position of the robot, e.g. resulting from GPS-based imprecision. Differences may also result from inexact determination of the positions of the first contour. Determining differences and path corrections based on these may be done e.g. by using a method for determining the position of the moveable object, as disclosed in EP 2 749 983 A2.

In this invention, the moveable object starts determining the path with a first starting point that is comprised in the first contour. When hitting the first starting point a second time for determining the path, the path is transformed into the first contour. Additionally, a new starting point is set.

This method leads the moveable object or robot to move "inward", i.e. with every round closer to a middle area of the first contour. This middle area is not necessarily sited in a geometric mid of the first contour.

This starting point is a special position that may also be used for an automatic start.

In this invention, when the distance between the first reference location and a forth reference location comprised in the first contour is smaller than a predefined distance, the fourth reference location is transformed into the second reference location.

Situations like this occur, when the robot comes to a tight corner, e.g. corners with an acute angle. Using this method, then, has the advantage to avoid unnecessary moves and thus to save energy and time by maintaining a high area coverage.

In some embodiments, when the first starting point is used a second time for determining the path and the distance between one reference location in the first contour and at least one other reference location in the first contour has been found smaller than the predefined distance, it is advantageous to identify this area that is cut off the central area and to handle the separated area by using a special method, called Separate Area Check.

This special method consists of at least following steps:
- Each fourth reference location in the first contour is checked for having been used to determine the n-tuple associated to the first target location;
- Each fourth reference location that has not been used is checked if there is at least one fifth reference location that has not been used and the distance between the fourth and the fifth reference location (140, 141) is bigger than the predefined distance;
- All fifth reference locations are transformed into a second contour.

Separate Area Check is executed at the end of each round, i.e. when the first starting point is reached again. Then, all n-tuples associated to positions in the first contour are checked, if they have been used for determining the n-tuple associated to the first target location. To enable this check, the n-tuples need an additional entry.

All n-tuples of the first contourthat have not been used - i.e. that are associated to fourth reference locations- must lie in the Separate Area, i.e. apart from the area that can be reached by the next round. These n-tuples are candidates "to be treated later". The notion "treated" may mean that the robot has to go to this position and/or has to do some action on this position. However, the Separate Area may be so small, that the robot has treated it already, e.g. because the robot's action to be done has some overlap. To check this, each n-tuple associated to fourth reference locations needs to be check against other reference locations within the Separate Area, i.e. against fifth reference locations. Then, all n-tuples that fulfil a distance criterion - say: their distance is bigger than the predefined distance - must be treated later, indeed. For this, a second contour is filled with these positions.

This method has the advantage to guarantee the proper treatment even of Separate Areas.

In some embodiments, when the first starting point is used for determining the path a second time and the number of reference locations in the first contour is below a predefined number, then the moveable object is moved to said reference locations in the first contour, and then the number of reference locations in the first contour is set to zero.

This method is used when the first contour has only a few reference locations left, i.e. their number is below a predefined number. Then, the robot is moved inside the first contour and then the number of reference locations in the first contour is set to zero.

After being moved inside the first contour, the robot can execute any kind of movement that only deals with a small number of positions left. For instance, the robot can be moved outward, e.g. in spirals. After that, and if no Separate Areas are left, moving is finished.

In some embodiments, when the number of reference locations in the first contour is set to zero and there is a second contour with a number of reference locations greater than zero, then a method with following steps is executed:
- Retrieving from the storage device all n-tuples that are defined as viable;
- Determining a cross-path between the first starting point and at least one reference location in the second contour, by using a next-neighbour traversing method;
- Moving the moveable object on the cross-path to the reference location in the second contour;
- Transforming the at least one reference location in the second contour into the first starting point and
- Transforming the second contour into the first contour;

Otherwise stop the moveable object.

To select the Separate Area or one of the Separate Areas that are left, one or more of following methods may be used: LIFO, next-neighbour, random, or other method. To move the moveable object to this area, the so-called A* algorithm is a preferred method.

In some embodiments, known obstacles are defined. This method has the advantage that predefined areas can be avoided, e.g. rocks, water, dangerous areas, or the like, or even freely defined areas.

For this, at least one location in the physical area associated to a corresponding n-tuple can be defined as a special contour, namely as an obstacle.

This requires an additional entry in the corresponding n-tuple. When positions corresponding to the special contour are approached, they become part of the first contour and are avoided this way.

In some embodiments, the robot deals with unknown obstacles, i.e. the first target location associated to the determined n-tuple is not reachable. This method has the advantage that collision with unknown objects are avoided or minimized, also depending on the sensors that are used for recognizing these unknown objects.

When the first target location associated to the determined n-tuple is not reachable, at least following steps are executed:
- Transforming all n-tuples associated to the path and the reference locations of the first contour that have not been used yet for determining the n-tuple associated to the first target location to a third contour;
- Transforming the third contour into the first contour by inverting the order of the n-tuples and inverting the orientation information.

Hence, the robot makes some special moves: It moves back from the unknown obstacle. This is achieved by inverting the order of the n-tuples and inverting the orientation information.

The invention will best be understood from the following detailed description of some embodiments of the invention shown in the accompanying drawings, wherein:
**Fig. 1** depicts schematically an area where a moveable object according to the present invention moves;
**Fig. 2** illustrates some methods of the present invention;
**Fig. 3a** depicts the situation when the starting point is used only once;
**Fig. 3b** depicts the situation when the starting point is used a second time for determining the path;
**Fig. 4a** depicts the situation when distance between positions is below a predefined distance;
**Fig. 4b** depicts the situation after executing Tight Corner Check;
**Fig. 5** depicts the situation when Separate Area Check applies.

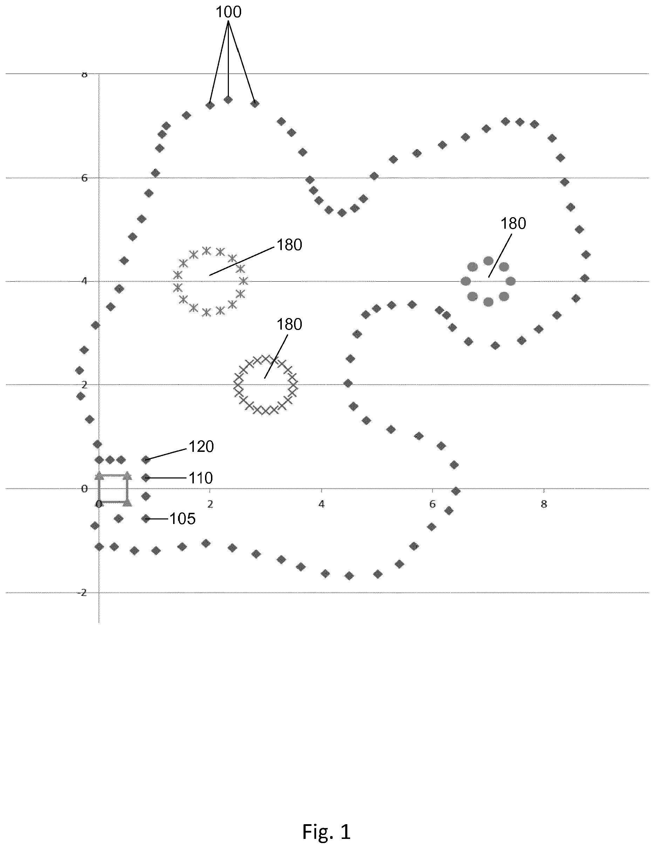

**Fig. 1** depicts schematically an area where a moveable object according to the present invention is moved. The area is bordered by a first contour 100, with first reference location 110 and second reference location 120 that are comprised in a first contour 100. Of course, the first contour 100 can be of any shape to demonstrate the flexibility of the methods of this invention. Furthermore, first starting point 105 is shown, where the robot 10 starts to move. Within first contour 100, there are three areas that are marked as known obstacle 180. These areas may be real obstacles, sinks, water, or any kind of areas where the robot 10 should not move. The area shown here - and in the other figures - has only 2-dimensional extensions. Hence, the methods explained in these embodiments only consider 2-dimensional areas. However, the methods of the present invention may as well be applied to 3-dimensional areas.

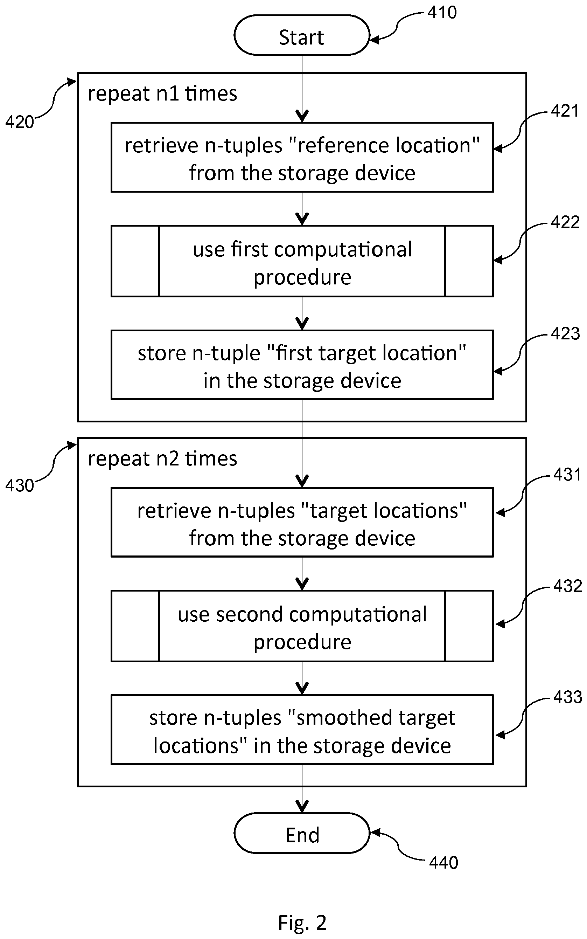

**Fig. 2** illustrates some methods that are used by the robot 10 when it is moving. After the start of procedure, step 410, the robot 10 retrieves n-tuples 210, 220, which are associated to first reference location 110 and second reference location 120, from the storage device 300, step 421. Storage device 300 and some computational devices may be placed on the robot 10, but also on a distant device with a wireless or wired connection to the robot 10.

Then, a first computational procedure is used to determine the n-tuple 260 associated to the first target location (160), step 422. To execute this, the first computational procedure at least needs two n-tuples 210, 220, which are associated to first reference location 110 and second reference location and at least contain x- and y-coordinates of these locations, and orientation information. The first computational procedure may as well use a higher number of reference locations, e.g. three. The orientation information determines the way the robot 10 will move. For instance, if orientation information of first reference location 110 and second reference location 120 of **Fig. 1** has value "clockwise", then the robot 10 will move up from first starting point 105.

After having executed the first computational procedure, n-tuple 260, which is associated to first target location 160, is stored in the storage device 300, step 423. Steps 421, 422, 423 are repeated n1 times.

A preferred strategy can be to repeat this step until one round is finished, then do some checks, and after that start again, from step 410. With this strategy, path 150, which at least consists of first target location 160, is determined for every round in step 420.

When path 150 has been determined, step 420, smoothed path 155 is determined, step 430.

Note that step 420 and step 430 are not necessarily executed strictly sequentially. There may be some overlap, e.g. the smoothed path 155 may be determined as soon as only some - e.g. 7 - target locations of path 150 have been determined.

In step 431, n-tuple 260, which is associated to first target location 160, is retrieved from the storage device 300. After that, second computational procedure is executed, e.g. by using modified spline interpolation. In the present invention, "modified" means that simply executing a smoothing method like spline interpolation may endanger the robot. For instance, if crashing a rock is suspected and said rock lies on a convex curve, the robot's smoothed path may lie on a concave curve, i.e. away from the rock. This method has the advantage of further reducing the danger of touching obstacles. Note that modified spline interpolation needs a modified n-tuple that indications border situations like these. After having executed the first computational procedure, n-tuples 265, 266, which are associated to first and second smoothed target location 165, 166, are stored in the storage device 300, step 433. Steps 431, 432, 433 are repeated n2 times. End of this procedure 440 may be reached at every round, or after having treated the complete area within first contour 100.

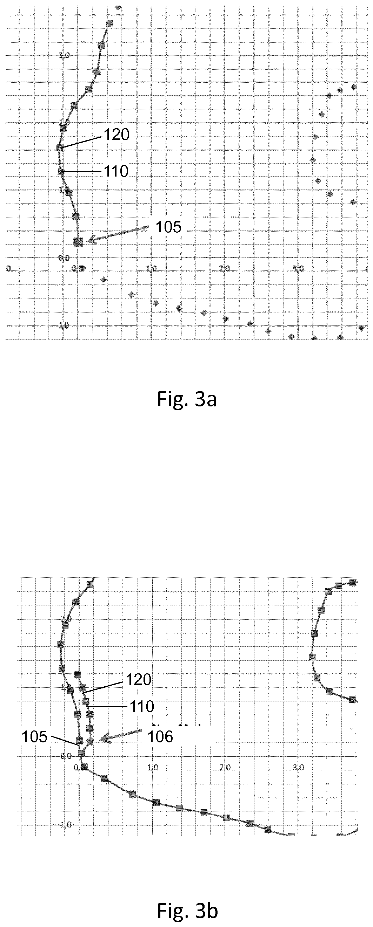

**Fig. 3a** depicts the situation when the starting point 105 is used only once. Robot 10 starts at first starting point 105 and - e.g. with orientation information "up" - it moves up, e.g. touching positions 110 and 120 of first contour 100.

**Fig. 3b** depicts the situation when the starting point 105 is used a second time for determining the path 150. This situation appears when the first round has been finished. Then, a second starting point 106 is determined and a new first contour 100, with positions first reference location 110 and second reference location 120, is taken. Consequently, second starting point 106 is transformed into starting point 105 for this round.

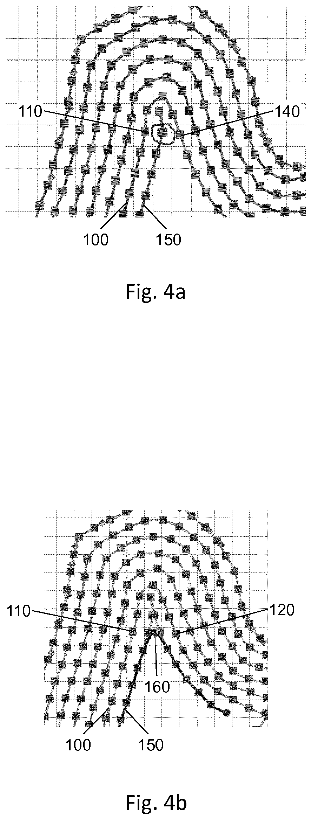

**Fig. 4a** depicts the situation when distance between positions is below a predefined distance. In this example, first reference location 110 is not used in combination with second reference location 120 that would be the next position, but rather with reference location 121, because using second reference location 120 would result in an acute angle where the robot 10 has to move.

To avoid the unnecessary move of robot 10 in an acute angle, Tight Corner Check method is used, as depicted in **Fig. 4b****.** For this, reference location 121 is used to determined first target location 160. Thus, the acute angle situation is avoided.

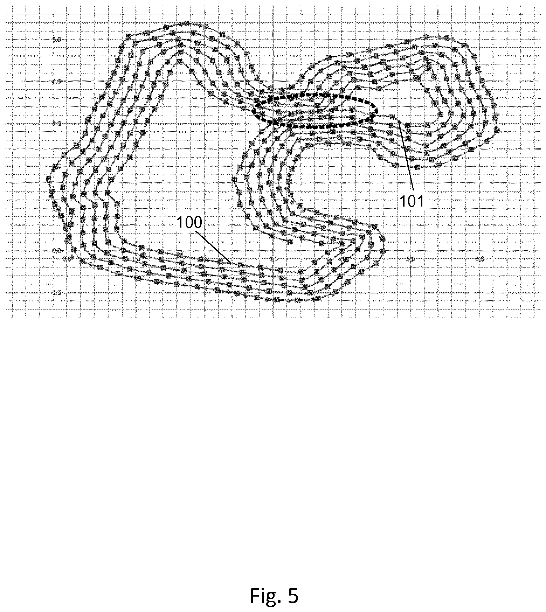

**Fig. 5** depicts the situation when Separate Area Check applies. In this situation, second contour 101 is separated from first contour 100, because all positions in bottleneck 103 have already been treated. In this situation, all n-tuples associated to positions in the first contour 100 are checked, if they have been used for determining the n-tuple 260 associated to the first target location 160. For this check, the n-tuples need an additional entry.

All n-tuples of the first contourthat have not been used - i.e. that are associated to fourth reference locations- must lie in the Separate Area, i.e. apart from the area that can be reached by the next round. These n-tuples build second contour 101 and are candidates "to be treated later". However, the Separate Area within second contour 101 may be so small, that the robot 10 has treated it already, e.g. because the robot 10 has an overlapping frame. To check this, each n-tuple 240 associated to fourth reference location 140 needs to be check against other reference locations within the Separate Area, i.e. against fifth reference locations 141. Then, all n-tuples that fulfil a distance criterion - say: their distance is bigger than the predefined distance pd - must be treated later, indeed. Forthis, the second contour 101 consists of these positions. Positions with distance smaller than predefined distance pd are deleted from the list "candidates to be treated later" of second contour 101.

### List of Reference Signs

- 10: moveable object, robot
- 100: first contour
- 101: second contour
- 102: third contour
- 105: first starting point
- 106: second starting point
- 110: first reference location
- 120: second reference location
- 130: third reference location
- 140, 141: fourth, fifth reference location
- 150: path
- 155: smoothed path
- 160: first target location
- 180: known obstacle
- 165, 166: first and second smoothed target location
- 210: n-tuple (coordinate) of first reference location
- 220: n-tuple (coordinate) of second reference location
- 230: n-tuple (coordinate) of third reference location
- 260: n-tuple (coordinate) of first target location
- 265, 266: n-tuples of first and second smoothed target location
- 280: n-tuple (coordinate) of known obstacle
- 300: storage device
- 410: start of procedure
- 420, 421, 422, 423: steps to determine path
- 430, 431, 432, 433: steps to determine smoothed path
- 440: end of procedure
- pd: predefined distance
- pn: predefined number of reference locations
- sx, sy: uncertainties of x ory

## Claims

1. Method for determining a path (150) for a moveable object (10) in a physical area comprising at least a first reference location (110) and a second reference location (120), attributed with an orientation information, the method based on at least the first reference location (110) and the second reference location (120),
wherein the first and the second reference locations (110, 120) are comprised in a first contour (100),
wherein the path (150) comprises at least a first target location (160),
wherein each of the first target location (160) and the reference locations (110, 1129) is associated to a corresponding n-tuple (210, 220, 260) wherein the n-tuple specifies the position of the corresponding location and the orientation information,
wherein the orientation information comprises a preferred angle or angle range and/or a direction or preferred direction, an information such as "go preferably left" or "go preferably clockwise", and/or a prevention, and determines the way the moveable object moves to the at least first target location,
wherein the n-tuples (210, 220) of the first and the second reference location (110, 120) are stored in a storage device (300);
said method comprising at least the steps of:
- retrieving from the storage device (300) at least the n-tuples (210, 220) associated to the first and the second reference location (110, 120);
- determining the n-tuple (260) associated to the first target location (160) by using a first computational procedure, wherein the first computational procedure is based on the orientation information and at least on the n-tuples (210, 220) associated to the first and the second reference location (110, 120);
- storing the n-tuple (260) associated to the first target location (160) in the storage device (300); and
wherein the moveable object (10) starts determining the path (150) with a first starting point (105) that is comprised in the first contour (100) and, when the first starting point (105) is used a second time for determining the path (150), the path (150) is transformed into the first contour (100) and a new starting point is set, and
wherein , when a distance between the first reference location (110) and another reference location (140) comprised in the first contour (100) is smaller than a predefined distance (pd), said another reference location (140) is transformed into the second reference location (120).

2. Method according to claim 1,
wherein when the first computational procedure leads to more than one first target locations, the orientation information is of Boolean type.

3. Method according to claim 1 or 2,
wherein the n-tuple (210, 220, 260) comprises at least the orientation information and
at least one x-coordinate and one y-coordinate and/or a function that represents at least a part of the first contour (100).

4. Method according to one of the preceding claims,
wherein the n-tuple (260) associated to the first target location (160) is determined by executing the first computational procedure comprising following steps:
- dropping a perpendicular at a predefined point (215), preferably the half, of a line connecting the first and the second reference location (110, 120);
- determining a direction, based on the orientation information;
- determining the first target location (160) either at the predefined point (215) or on said perpendicular at a pre-selected distance from the predefined point (215) in the determined direction.

5. Method according to one of the preceding claims,
wherein the n-tuple (260) associated to the first target location (160) is determined by executing the first computational procedure, based on orientation information and at least on the n-tuples (210, 220) associated to the first and the second reference location (110, 120) and a third n-tuple (230), which is also part of the first contour (100), associated to a third reference location (130), comprising following steps:
- constructing a circle that includes the first, the second, and the third reference location (110, 120, 130), wherein said second reference location (120) is between said first and said third reference location (110, 130);
- determining a direction, based on the orientation information and the centre of said circle, on a line between second reference location (120) and said centre;
- determining the first target location (160) on said line at a pre-selected distance from the second reference location (120).

6. Method according to claim 4 or 5,
wherein uncertainties associated with the reference locations (110, 120) and/or the current position of the moveable object (10) are subtracted from the pre-selected distance.

7. Method according to one of the preceding claims,
by using additionally first and second smoothed target locations (165, 166) associated ton-tuples (265, 266)
wherein, after determining the path (150) for the moveable object (10), a smoothed path (155) is determined for the moveable object (10), comprising at least the steps of:
- retrieving from the storage device (300) at least the n-tuple (260) associated to the first target location (160);
- determining the n-tuples (265, 266) associated to the first and second smoothed target locations (165, 166) by using a second computational procedure,
wherein the second computational procedure is based on the n-tuple (260) associated to the first target location (160);
- storing the n-tuples (265, 266) associated to the first and second smoothed target locations (165, 166) in the storage device (300).

8. Method according to claim 7,
wherein the moveable object (10) moves on a smoothed path (155),
wherein the smoothed path (155) is calculated from the path (150) by using an interpolation method, particularly a polynomial interpolation or a spline interpolation, preferably a cubic spline algorithm.

9. Method according to claim 7,
wherein the smoothed path (155) comprises at least one reference location (110) of the first contour (100), from and/or to which the interpolation method is a straight line.

10. Method according to claim 7 or 8,
wherein the n-tuples (265, 266) associated to the first and second smoothed target locations (165, 166) are determined by a third computational procedure that provides the same distance between each pair of adjacent smoothed target locations (165, 166).

11. Method according to one of the preceding claims,
wherein the n-tuple (260) associated to the first target location (160) is compared with the first target location (160) in the physical area, or
or the n-tuples (265, 266) associated to the first and second smoothed target locations (165, 166) are compared with the first and second smoothed target locations (165, 166) in the physical area and, if differences appear between the n-tuples (265, 266) and the first and second smoothed target locations (165, 166), the n-tuples (265, 266) are corrected accordingly.

12. Method according to one of the preceding claims,
wherein, when
- the first starting point (105) is used a second time for determining the path (150) and
- the distance between one reference location in the first contour (100) and at least a fourth reference location (140) in the first contour (100) has been found smaller than the predefined distance (pd),
then a method with following steps is executed:
- each fourth reference location in the first contour (100) is checked for having been used to determine the n-tuple (260) associated to the first target location (160);
- each fourth reference location (140) that has not been used is checked if there is at least one fifth reference location (141) that has not been used and the distance between the fourth and the fifth reference location (140, 141) is bigger than the predefined distance (pd); and
- if there is at least one fifth reference location that has not been used and the distance between the fourth and fifth reference location is bigger than the predefined distance, all fifth reference locations (141) are transformed into a second contour (101).

13. Method according to one of the preceding claims,
wherein, when
- the first starting point (105) is used for determining the path (150) a second time and
- the number of reference locations in the first contour (100) is below a predefined number (pn),
then
- the moveable object (10) is moved to said reference locations in the first contour (100), and then
- the number of reference locations in the first contour (100) is set to zero.

14. Method according to claim 13,
wherein, when
- the number of reference locations in the first contour (100) is set to zero and
- there is a second contour (101) with a number of reference locations greater than zero then a method with following steps is executed:
- retrieving from the storage device (300) all n-tuples that are defined as viable;
- determining a cross-path between the first starting point (105) and at least one reference location in the second contour (101), by using a traversing method;
- moving the moveable object (10) on the cross-path to the reference location in the second contour (101);
- transforming the at least one reference location in the second contour (101) into the first starting point (105) and
- transforming the second contour (101) into the first contour (100);
otherwise stop the moveable object (10).

15. Method according to one of the preceding claims,
wherein at least one location (180) in the physical area associated to a corresponding n-tuple (280) can be defined as a special contour, namely as an obstacle.

16. Method according to one of the preceding claims,
wherein, when the first target location (160) associated to the determined the n-tuple (260) is not reachable, at least following steps are executed:
- transforming all n-tuples associated to the path (150) and the reference locations of the first contour (100) that have not been used yet for determining the n-tuple (260) associated to the first target location (160) to a third contour (103);
- transforming the third contour (103) into the first contour (100) by inverting the order of the n-tuples and inverting the orientation information.

## Patentansprüche

1. Verfahren zur Bestimmung eines Pfads (150) für ein bewegliches Objekt (10) in einem physischen Bereich, der mindestens einen ersten Bezugsort (110) und einen zweiten Bezugsort (120) umfasst, mit einer Orientierungsinformation als Attribut, wobei das Verfahren mindestens auf dem ersten Bezugsort (110) und dem zweiten Bezugsort (120) basiert,
wobei der erste und der zweite Bezugsort (110, 120) in einer ersten Kontur (100) enthalten sind,
wobei der Pfad (150) mindestens einen ersten Zielort (160) umfasst,
wobei der erste Zielort (160) und die Bezugsorte (110, 1129) jeweils mit einem entsprechenden n-Tupel (210, 220, 260) assoziiert sind, wobei das n-Tupel die Position des entsprechenden Ortes und die Orientierungsinformation spezifiziert,
wobei die Orientierungsinformation einen bevorzugten Winkel oder Winkelbereich und/oder eine Richtung oder bevorzugte Richtung, eine Information wie etwa "gehe vorzugsweise nach links" oder "gehe vorzugsweise im Uhrzeigersinn" und/oder eine Prävention umfasst und die Weise bestimmt, auf die sich das bewegliche Objekt zu dem mindestens einen Zielort bewegt,
wobei die n-Tupel (210, 220) des ersten und des zweiten Bezugsorts (110, 120) in einer Speicherungsvorrichtung (300) gespeichert sind;
wobei das Verfahren mindestens die folgenden Schritte umfasst:
- Abrufen mindestens der n-Tupel (210, 220), die mit dem ersten und dem zweiten Bezugsort (110, 120) assoziiert sind, aus der Speicherungsvorrichtung (300);
- Bestimmen des n-Tupels (260), das mit dem ersten Zielort (160) assoziiert ist, durch Verwendung einer ersten rechnerischen Prozedur, wobei die erste rechnerische Prozedur auf der Orientierungsinformation und mindestens auf den n-Tupeln (210, 220), die mit dem ersten und dem zweiten Bezugsort (110, 120) assoziiert sind, basiert;
- Speichern des mit dem ersten Zielort (160) assoziierten n-Tupels (260) in der Speicherungsvorrichtung (300); und
wobei das bewegliche Objekt (10) damit beginnt, den Pfad (150) mit einem ersten Startpunkt (105), der in der ersten Kontur (100) enthalten ist, zu bestimmen, und, wenn der erste Startpunkt (5) ein zweites Mal zur Bestimmung des Pfads (150) verwendet wird, der Pfad (150) in die erste Kontur (100) transformiert und ein neuer Startpunkt gesetzt wird, und
wobei, wenn eine Distanz zwischen dem ersten Bezugsort (110) und einem anderen Bezugsort (140), der in der ersten Kontur (100) enthalten ist, kleiner als eine vordefinierte Distanz (pd) ist, der andere Bezugsort (140) in den zweiten Bezugsort (120) transformiert wird.

2. Verfahren nach Anspruch 1,
wobei, wenn die erste rechnerische Prozedur zu mehr als einem ersten Zielort führt, die Orientierungsinformation vom booleschen Typ ist.

3. Verfahren nach Anspruch 1 oder 2,
wobei das n-Tupel (210, 220, 260) mindestens die Orientierungsinformation und mindestens eine x-Koordinate und eine y-Koordinate und/oder eine Funktion, die mindestens einen Teil der ersten Kontur (100) repräsentiert, umfasst.

4. Verfahren nach einem der vorhergehenden Ansprüche,
wobei das mit dem ersten Zielort (160) assoziierte n-Tupel (260) durch Ausführen der ersten rechnerischen Prozedur bestimmt wird, was die folgenden Schritte umfasst:
- Fallenlassen einer Senkrechten an einem vordefinierten Punkt (210), vorzugsweise der Hälfte, einer den ersten und den zweiten Bezugsort (110, 120) verbindenden Linie;
- Bestimmen einer Richtung auf der Basis der Orientierungsinformation;
- Bestimmen des ersten Zielorts (160) entweder an dem vordefinierten Punkt (215) oder auf der Senkrechten in einer vorgewählten Distanz von dem vordefinierten Punkt (215) in der bestimmten Richtung.

5. Verfahren nach einem der vorhergehenden Ansprüche, wobei das mit dem ersten Zielort (160) assoziierte n-Tupel (260) durch Ausführen der ersten rechnerischen Prozedur auf der Basis von Orientierungsinformationen und mindestens der mit dem ersten und dem zweiten Bezugsort (110, 120) assoziierten n-Tupel (210, 220) und eines dritten n-Tupels (230), das auch Teil der ersten Kontur (100) ist, das mit einem dritten Bezugsort (130) assoziiert ist, bestimmt wird, mit den folgenden Schritten:
- Konstruieren eines Kreises, der den ersten, den zweiten und den dritten Bezugsort (110, 120, 130) umfasst, wobei der zweite Bezugsort (120) zwischen dem ersten und dem dritten Bezugsort (110, 130) liegt;
- Bestimmen einer Richtung auf der Basis der Orientierungsinformation und der Mitte des Kreises auf einer Linie zwischen dem zweiten Bezugsort (120) und der Mitte;
- Bestimmen des ersten Zielorts (160) auf der Linie in einer vorgewählten Distanz von dem zweiten Bezugsort (120) .

6. Verfahren nach Anspruch 4 oder 5,
wobei mit den Bezugsorten (110, 120) und/oder der aktuellen Position des beweglichen Objekts (10) assoziierte Unbestimmtheiten von der vorgewählten Distanz subtrahiert werden.

7. Verfahren nach einem der vorhergehenden Ansprüche, durch zusätzliche Verwendung eines ersten und zweiten geglätteten Zielorts (165, 166), die mit n-Tupeln (265, 266) assoziiert sind,
wobei nach dem Bestimmen des Pfads (150) für das bewegliche Objekt (10) ein geglätteter Pfad (155) für das bewegliche Objekt (10) bestimmt wird, mit mindestens den folgenden Schritten:
- Abrufen mindestens des mit dem ersten Zielort (160) assoziierten n-Tupels (260) aus der Speicherungsvorrichtung (300);
- Bestimmen der mit dem ersten und zweiten geglätteten Zielort (165, 166) assoziierten n-Tupel (265, 266) durch Verwendung einer zweiten rechnerischen Prozedur, wobei die zweite rechnerische Prozedur auf dem mit dem ersten Zielort (160) assoziierten n-Tupel (260) basiert;
- Speichern der mit dem ersten und zweiten geglätteten Zielort (165, 166) assoziierten n-Tupel (265, 266) in der Speicherungsvorrichtung (300).

8. Verfahren nach Anspruch 7,
wobei sich das bewegliche Objekt (10) auf einem geglätteten Pfad (155) bewegt,
wobei der geglättete Pfad (155) durch Verwendung eines Interpolationsverfahrens, insbesondere einer polynomischen Interpolation oder einer Spline-Interpolation, vorzugsweise eines kubischen Spline-Algorithmus, aus dem Pfad (150) berechnet wird.

9. Verfahren nach Anspruch 7,
wobei der geglättete Pfad (155) mindestens einen Bezugsort (110) der ersten Kontur (100) umfasst, wovon und/oder für die das Interpolationsverfahren eine Gerade ist.

10. Verfahren nach Anspruch 7 oder 8,
wobei die mit dem ersten und zweiten geglätteten Zielort (165, 166) assoziierten n-Tupel (265, 266) durch eine dritte rechnerische Prozedur bestimmt werden, die dieselbe Distanz zwischen jedem Paar angrenzender geglätteter Zielorte (165, 166) gibt.

11. Verfahren nach einem der vorhergehenden Ansprüche,
wobei das mit dem ersten Zielort (160) assoziierte n-Tupel (260) mit dem ersten Zielort (160) in dem physischen Bereich verglichen wird oder
die mit dem ersten und zweiten geglätteten Zielort (165, 166) assoziierten n-Tupel (265, 266) mit dem ersten und zweiten geglätteten Zielort (165, 166) in dem physischen Bereich verglichen werden und, wenn Differenzen zwischen den n-Tupeln (265, 266) und dem ersten und zweiten geglätteten Zielort (165, 166) erscheinen, die n-Tupel (265, 266) entsprechend korrigiert werden.

12. Verfahren nach einem der vorhergehenden Ansprüche, wobei, wenn
- der erste Startpunkt (105) ein zweites Mal zur Bestimmung des Pfads (150) verwendet wird und
- die Distanz zwischen einem Bezugsort in der ersten Kontur (100) und mindestens einem vierten Bezugsort (140) in der ersten Kontur (100) kleiner als die vordefinierte Distanz (pd) gefunden wurde,
dann ein Verfahren mit den folgenden Schritten ausgeführt wird:
- jeder vierte Bezugsort in der ersten Kontur (100) darauf geprüft wird, dass er zur Bestimmung des mit dem ersten Zielort (160) assoziierten n-Tupels (260) verwendet wurde;
- jeder vierte Bezugsort (140), der nicht verwendet wurde, darauf geprüft wird, ob es mindestens einen fünften Bezugsort (141) gibt, der nicht verwendet wurde, und die Distanz zwischen dem vierten und dem fünften Bezugsort (140, 141) größer als die vordefinierte Distanz (pd) ist; und,
- wenn es mindestens einen fünften Bezugsort (141) gibt, der nicht verwendet wurde, und die Distanz zwischen dem vierten und dem fünften Bezugsort größer als die vordefinierte Distanz ist, alle fünften Bezugsorte (141) in eine zweite Kontur (101) transformiert werden.

13. Verfahren nach einem der vorhergehenden Ansprüche, wobei, wenn
- der erste Startpunkt (105) ein zweites Mal zur Bestimmung des Pfads (150) verwendet wird und
- die Anzahl von Bezugsorten in der ersten Kontur (100) unter einer vordefinierten Anzahl (pn) liegt, dann
- das bewegliche Objekt (10) zu den Bezugsorten in der ersten Kontur (100) bewegt wird und dann
- die Anzahl von Bezugsorten in der ersten Kontur (100) auf null gesetzt wird.

14. Verfahren nach Anspruch 13,
wobei, wenn
- die Anzahl von Bezugsorten in der ersten Kontur (100) auf null gesetzt ist und
- es eine zweite Kontur (101) mit einer Anzahl von Bezugsorten größer als null gibt,
dann ein Verfahren mit den folgenden Schritten ausgeführt wird:
- Abrufen aller n-Tupel, die als machbar definiert sind, aus der Speicherungsvorrichtung (300);
- Bestimmen eines Kreuzpfads zwischen dem ersten Startpunkt (105) und mindestens einem Bezugsort in der zweiten Kontur (101) durch Verwendung eines Durchquerungsverfahrens;
- Bewegen des beweglichen Objekts (10) auf dem Kreuzpfad zu dem Bezugsort in der zweiten Kontur (101);
- Transformieren des mindestens einen Bezugsorts in der zweiten Kontur (101) in den ersten Startpunkt (105) und
- Transformieren der zweiten Kontur (101) in die erste Kontur (100);
andernfalls Stoppen des beweglichen Objekts (10).

15. Verfahren nach einem der vorhergehenden Ansprüche, wobei mindestens ein Ort (180) in dem physischen Bereich, der mit einem entsprechenden n-Tupel (280) assoziiert ist, als eine spezielle Kontur, nämlich als ein Hindernis, definiert werden kann.

16. Verfahren nach einem der vorhergehenden Ansprüche, wobei, wenn der mit dem bestimmten n-Tupel (260) assoziierte erste Zielort (160) nicht erreichbar ist, mindestens die folgenden Schritte ausgeführt werden:
- Transformieren aller mit dem Pfad (150) assoziierten n-Tupel und der Bezugsorte der ersten Kontur (100), die noch nicht zur Bestimmung des mit dem ersten Zielort (160) assoziierten n-Tupels (260) verwendet wurden, in eine dritte Kontur (103);
- Transformieren der dritten Kontur (103) in die erste Kontur (100) durch Umkehren der Reihenfolge der n-Tupel und Umkehren der Orientierungsinformation.

## Revendications

1. Procédé pour déterminer un trajet (150) pour un objet mobile (10) dans une zone physique comprenant
au moins une première localisation de référence (110) et une deuxième localisation de référence (120), attribuées à une information d'orientation, le procédé étant basé sur au moins la première localisation de référence (110) et la deuxième localisation de référence (120),
dans lequel les première et deuxième localisations de référence (110, 120) sont comprises dans un premier contour (100),
dans lequel le trajet (150) comprend au moins une première localisation cible (160),
dans lequel chaque localisation parmi la première localisation cible (160) et les localisations de référence (110, 1129) est associée à un n-uplet correspondant (210, 220, 260), dans lequel le n-uplet spécifie la position de la localisation correspondante et l'information d'orientation,
dans lequel l'information d'orientation comprend un angle préféré ou une plage d'angles préférée et/ou une direction ou une direction préférée, une information telle que "aller de préférence à gauche" ou "aller de préférence dans le sens des aiguilles d'une montre", et/ou une prévention, et détermine le parcours selon lequel l'objet mobile se déplace jusqu'à l'au moins une première localisation cible,
dans lequel les n-uplets (210, 220) des première et deuxième localisations de référence (110, 120) sont stockés dans un dispositif de stockage (300) ;
ledit procédé comprenant au moins les étapes de :
- extraction, à partir du dispositif de stockage (300), d'au moins les n-uplets (210, 220) associés aux première et deuxième localisations de référence (110, 120) ;
- détermination du n-uplet (260) associé à la première localisation cible (160) en utilisant une première procédure de calcul, dans lequel la première procédure de calcul est basée sur l'information d'orientation et au moins sur les n-uplets (210, 220) associés aux première et deuxième localisations de référence (110, 120) ;
- stockage du n-uplet (260) associé à la première localisation cible (160) dans le dispositif de stockage (300) ; et
dans lequel l'objet mobile (10) débute la détermination du trajet (150) avec un premier point de début (105) qui est compris dans le premier contour (100) et, lorsque le premier point de début (105) est utilisé une seconde fois pour déterminer le trajet (150), le trajet (150) est transformé à l'intérieur du premier contour (100) et un nouveau point de début est défini ; et
dans lequel, lorsqu'une distance entre la première localisation de référence (110) et une autre localisation de référence (140) comprise dans le premier contour (100) est inférieure à une distance prédéfinie (pd), ladite autre localisation de référence (140) est transformée selon la deuxième localisation de référence (120).

2. Procédé selon la revendication 1,
dans lequel, lorsque la première procédure de calcul aboutit à plus d'une première localisation cible, l'information d'orientation est de type booléen.

3. Procédé selon la revendication 1 ou 2,
dans lequel le n-uplet (210, 220, 260) comprend au moins l'information d'orientation et au moins une coordonnée x et une coordonnée y et/ou une fonction qui représente au moins une partie du premier contour (100).

4. Procédé selon l'une quelconque des revendications précédentes,
dans lequel le n-uplet (260) associé à la première localisation cible (160) est déterminé en exécutant la première procédure de calcul comprenant les étapes suivantes :
- abaissement d'une perpendiculaire au niveau d'un point prédéfini (215), de préférence à la moitié, d'une ligne reliant les première et deuxième localisations de référence (110, 120) ;
- détermination d'une direction, sur la base de l'information d'orientation ;
- détermination de la première localisation cible (160) soit au niveau du point prédéfini (215), soit sur ladite perpendiculaire à une distance présélectionnée par rapport au point prédéfini (215) dans la direction déterminée.

5. Procédé selon l'une quelconque des revendications précédentes,
dans lequel le n-uplet (260) associé à la première localisation cible (160) est déterminé en exécutant la première procédure de calcul, sur la base de l'information d'orientation et au moins des n-uplets (210, 220) associés aux première et deuxième localisations de référence (110, 120) et d'un troisième n-uplet (230), lequel fait également partie du premier contour (100), associé à une troisième localisation de référence (130), comprenant les étapes suivantes :
- construction d'un cercle qui inclut les première, deuxième et troisième localisations de référence (110, 120, 130), dans lequel ladite deuxième localisation de référence (120) est entre lesdites première et troisième localisations de référence (110, 130) ;
- détermination d'une direction, sur la base de l'information d'orientation et du centre dudit cercle, sur une ligne entre la deuxième localisation de référence (120) et ledit centre ;
- détermination de la première localisation cible (160) sur ladite ligne à une distance présélectionnée de la deuxième localisation de référence (120).

6. Procédé selon la revendication 4 ou 5,
dans lequel les incertitudes associées aux localisations de référence (110, 120) et/ou à la position actuelle de l'objet mobile (10) sont soustraites de la distance présélectionnée.

7. Procédé selon l'une quelconque des revendications précédentes,
en utilisant de façon additionnelle des première et deuxième localisations cibles lissées (165, 166) associées à des n-uplets (265, 266),
dans lequel, après la détermination du trajet (150) pour l'objet mobile (10), un trajet lissé (155) est déterminé pour l'objet mobile (10), comprenant au moins les étapes de :
- extraction, à partir du dispositif de stockage (300), d'au moins le n-uplet (260) associé à la première localisation cible (160) ;
- détermination des n-uplets (265, 266) associés aux première et deuxième localisations cibles lissées (165, 166) en utilisant une deuxième procédure de calcul,
dans lequel la deuxième procédure de calcul est basée sur le n-uplet (260) associé à la première localisation cible (160) ;
- stockage des n-uplets (265, 266) associés aux première et deuxième localisations cibles lissées (165, 166) dans le dispositif de stockage (300).

8. Procédé selon la revendication 7,
dans lequel l'objet mobile (10) se déplace sur un trajet lissé (155),
dans lequel le trajet lissé (155) est calculé à partir du trajet (150) en utilisant un procédé par interpolation, particulièrement une interpolation polynomiale ou une interpolation spline, de préférence un algorithme spline cubique.

9. Procédé selon la revendication 7,
dans lequel le trajet lissé (155) comprend au moins une localisation de référence (110) du premier contour (100), à partir de laquelle et/ou jusqu'à laquelle le procédé par interpolation est une ligne droite.

10. Procédé selon la revendication 7 ou 8,
dans lequel les n-uplets (265, 266) associés aux première et deuxième localisations cibles lissées (165, 166) sont déterminés au moyen d'une troisième procédure de calcul qui fournit la même distance entre chaque paire de localisations cibles lissées adjacentes (165, 166).

11. Procédé selon l'une quelconque des revendications précédentes,
dans lequel le n-uplet (260) associé à la première localisation cible (160) est comparé à la première localisation cible (160) dans la zone physique, ou
les n-uplets (265, 266) associés aux première et deuxième localisations cibles lissées (165, 166) sont comparés aux première et deuxième localisations cibles lissées (165, 166) dans la zone physique et, si des différences apparaissent entre les n-uplets (265, 266) et les première et deuxième localisations cibles lissées (165, 166), les n-uplets (265, 266) sont corrigés en conséquence.

12. Procédé selon l'une quelconque des revendications précédentes,
dans lequel, lorsque
- le premier point de début (105) est utilisé une seconde fois pour déterminer le trajet (150) et que
- la distance entre une localisation de référence dans le premier contour (100) et au moins une quatrième localisation de référence (140) dans le premier contour (100) s'est avérée être inférieure à la distance prédéfinie (pd),
alors un procédé selon les étapes suivantes est exécuté :
- chaque quatrième localisation de référence dans le premier contour (100) est vérifiée pour voir si elle a été utilisée pour déterminer le n-uplet (260) associé à la première localisation cible (160) ;
- chaque quatrième localisation de référence (140) qui n'a pas été utilisée est vérifiée pour voir s'il y a au moins une cinquième localisation de référence (141) qui n'a pas été utilisée et si la distance entre les quatrième et cinquième localisations de référence (140, 141) est supérieure à la distance prédéfinie (pd) ; et
- s'il y a au moins une cinquième localisation de référence qui n'a pas été utilisée et si la distance entre les quatrième et cinquième localisations de référence est supérieure à la distance prédéfinie, toutes les cinquièmes localisations de référence (141) sont transformées à l'intérieur d'un deuxième contour (101).

13. Procédé selon l'une quelconque des revendications précédentes,
dans lequel, lorsque
- le premier point de début (105) est utilisé pour déterminer le trajet (150) une seconde fois et que
- le nombre de localisations de référence dans le premier contour (100) est inférieur à un nombre prédéfini (pn),
alors
- l'objet mobile (10) est déplacé jusqu'auxdites localisations de référence dans le premier contour (100), puis
- le nombre de localisations de référence dans le premier contour (100) est défini à zéro.

14. Procédé selon la revendication 13,
dans lequel, lorsque
- le nombre de localisations de référence dans le premier contour (100) est défini à zéro et que
- il y a un deuxième contour (101) qui comporte un nombre de localisations de référence supérieur à zéro alors un procédé selon les étapes suivantes est exécuté :
- extraction, à partir du dispositif de stockage (300), de tous les n-uplets qui sont définis comme étant viables ;
- détermination d'un trajet de traverse entre le premier point de début (105) et au moins une localisation de référence dans le deuxième contour (101), en utilisant un procédé par traversée ;
- déplacement de l'objet mobile (10) sur le trajet de traverse jusqu'à la localisation de référence dans le deuxième contour (101) ;
- transformation de l'au moins une localisation de référence dans le deuxième contour (101) selon le premier point de début (105) et
- transformation du deuxième contour (101) selon le premier contour (100) ;
sinon, arrêt de l'objet mobile (10).

15. Procédé selon l'une quelconque des revendications précédentes,
dans lequel au moins une localisation (180) dans la zone physique associée à un n-uplet correspondant (280) peut être définie en tant que contour spécial, c'est-à-dire en tant qu'obstacle.

16. Procédé selon l'une quelconque des revendications précédentes,
dans lequel, lorsque la première localisation cible (160) associée au n-uplet déterminé (260) ne peut pas être atteinte, au moins les étapes suivantes sont exécutées :
- transformation de tous les n-uplets associés au trajet (150) et des localisations de référence du premier contour (100) qui n'ont pas encore été utilisées pour déterminer le n-uplet (260) associé à la première localisation cible (160) selon un troisième contour (103) ;
- transformation du troisième contour (103) selon le premier contour (100) en inversant l'ordre des n-uplets et en inversant l'information d'orientation.
